# EUROPEAN PATENT SPECIFICATION

(11) **EP 4 409 848 B1**
(45) Date of publication and mention of the grant of the patent: **21.01.2026**
(21) Application number: 21959000.7
(22) Date of filing: 30.09.2021
(51) Int. Cl.: H04L 27/00, H04W 56/00, H04L 5/00, H04B 7/185

(54) **ENHANCED UPLINK SYNCHRONIZATION SCHEME**
VERBESSERTES UPLINK-SYNCHRONISATIONSSCHEMA
SCHÉMA DE SYNCHRONISATION DE LIAISON MONTANTE AMÉLIORÉ

(43) Date of publication of application: 07.08.2024
(73) Proprietor: Nokia Technologies Oy, 02610 Espoo (FI)
(72) Inventor: WEN, Pingping, Shanghai 201206 (CN); SUN, Jingyuan, Beijing 100010 (CN); YUAN, Ping, Beijing 100011 (CN)
(74) Representative: Nokia EPO representatives
(86) International application number: PCT/CN2021/122475
(87) International publication number: WO 2023/050434

(56) References cited:
- EP-A1- 3 772 231
- CN-A- 110 912 846
- CN-A- 113 261 218
- ZTE: "Discussion on the synchronization for IoT-NTN", vol. RAN WG1, no. e-Meeting; 20210816 - 20210827, 6 August 2021 (2021-08-06), XP052033616, Retrieved from the Internet <URL:https://ftp.3gpp.org/tsg_ran/WG1_RL1/TSGR1_106-e/Docs/R1-2107779.zip R1-2107779 Discussion on synchronization for IoT-NTN.docx> [retrieved on 20210806]
- NOKIA, NOKIA SHANGHAI BELL: "Doppler Compensation, Uplink Timing Advance, Random Access and UE Location in NTN", 3GPP DRAFT; R1-1911220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Chongqing, China; 20191014 - 20191020, 5 October 2019 (2019-10-05), Mobile Competence Centre ; 650, route des Lucioles ; F-06921 Sophia-Antipolis Cedex ; France , XP051789991

## Description

### FIELD

Embodiments of the present disclosure generally relate to the field of telecommunication and in particular to devices, methods, apparatuses, and computer readable storage media of enhanced Uplink (UL) synchronization.

### BACKGROUND

The enhancement on time and frequency synchronization for Internet of Things (IoT) over Non-Terrestrial Networks (NTN) has been studied. The Global Navigation Satellite System (GNSS) capability in the UE is taken as the working assumption on Narrow Band- IoT (NB-IoT)/ LTE enhanced MTC (eMTC) support for NTN.

ZTE: "Discussion on the synchronization for IoT-NTN" 3GPP draft; R1-2107779, XP052033616 discusses issues on the synchronization enhancements for IoT-NTN.

### SUMMARY

In general, example embodiments of the present disclosure provide a solution of enhanced UL synchronization.

In a first aspect, there is provided a first device. The first device comprises at least one processor; and at least one memory including computer program codes; the at least one memory and the computer program codes are configured to, with the at least one processor, cause the first device at least to obtain a configuration of a gap within which a radio resource control connected state of the first device is kept; receive, within the gap, system broadcasted information used for deriving a compensation associated with a transmission between the first device and a second device; and perform an uplink synchronization between the first device to the second device within the gap.

In a second aspect, there is provided a second device. The second device comprises at least one processor; and at least one memory including computer program codes; the at least one memory and the computer program codes are configured to, with the at least one processor, cause the second device at least to transmit, to a first device, a configuration of a gap within which a radio resource control connected state of the first device is kept; transmit, within the gap, system broadcasted information used for deriving a compensation associated with a transmission between the first device and a second device; and receive, from the first device, random access information to perform an uplink synchronization between the first device to the second device within the gap.

In a third aspect, there is provided a method. The method comprises obtaining a configuration of a gap within which a radio resource control connected state of the first device is kept; receiving, within the gap, system broadcasted information used for deriving a compensation associated with a transmission between the first device and a second device; and performing an uplink synchronization between the first device to the second device within the gap.

In a fourth aspect, there is provide a method. The method comprises transmitting, to a first device, a configuration of a gap within which a radio resource control connected state of the first device is kept; transmitting, within the gap, system broadcasted information used for deriving a compensation associated with a transmission between the first device and a second device; and receiving, from the first device, random access information to perform an uplink synchronization between the first device to the second device within the gap.

In a fifth aspect, there is provided an apparatus comprising means for obtaining a configuration of a gap within which a radio resource control connected state of the first device is kept; means for receiving, within the gap, system broadcasted information used for deriving a compensation associated with a transmission between the first device and a second device; and means for performing an uplink synchronization between the first device to the second device within the gap.

In a sixth aspect, there is provided an apparatus comprising means for transmitting, to a first device, a configuration of a gap within which a radio resource control connected state of the first device is kept; means for transmitting, within the gap, system broadcasted information used for deriving a compensation associated with a transmission between the first device and a second device; and means for receiving, from the first device, random access information to perform an uplink synchronization between the first device to the second device within the gap.

In a seventh aspect, there is provided a computer readable medium having a computer program stored thereon which, when executed by at least one processor of a device, causes the device to carry out the method according to the third aspect or the fourth aspect.

Other features and advantages of the embodiments of the present disclosure will also be apparent from the following description of specific embodiments when read in conjunction with the accompanying drawings, which illustrate, by way of example, the principles of embodiments of the disclosure.

### BRIEF DESCRIPTION OF THE DRAWINGS

Embodiments of the disclosure are presented in the sense of examples and their advantages are explained in greater detail below, with reference to the accompanying drawings, where
FIG. 1 illustrates an example environment in which example embodiments of the present disclosure can be implemented.
FIG. 2 shows a signaling chart illustrating a process of enhanced UL synchronization according to some example embodiments of the present disclosure.
FIG. 3 shows a flowchart of an example method of enhanced UL synchronization according to some example embodiments of the present disclosure.
FIG. 4 shows a flowchart of an example method of enhanced UL synchronization according to some example embodiments of the present disclosure.
FIG. 5 shows a simplified block diagram of a device that is suitable for implementing example embodiments of the present disclosure.
FIG. 6 shows a block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish functionalities of various elements. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as fifth generation (5G) systems, Long Term Evolution (LTE), LTE-Advanced (LTE-A), Wideband Code Division Multiple Access (WCDMA), High-Speed Packet Access (HSPA), Narrow Band Internet of Things (NB-IoT) , Non- terrestrial Network (NTN) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) new radio (NR) , the future sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR Next Generation NodeB (gNB), a Remote Radio Unit (RRU), a radio header (RH), a remote radio head (RRH), a relay, a low power node such as a femto, a pico, and so forth, depending on the applied terminology and technology. A RAN split architecture comprises a gNB-CU (Centralized unit, hosting RRC, SDAP and PDCP) controlling a plurality of gNB-DUs (Distributed unit, hosting RLC, MAC and PHY). A relay node may correspond to DU part of the IAB node.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to Mobile Termination (MT) part of the integrated access and backhaul (IAB) node (a.k.a. a relay node). In the following description, the terms "terminal device", "communication device", "terminal", "user equipment" and "UE" may be used interchangeably.

Although functionalities described herein can be performed, in various example embodiments, in a fixed and/or a wireless network node, in other example embodiments, functionalities may be implemented in a user equipment apparatus (such as a cell phone or tablet computer or laptop computer or desktop computer or mobile IoT device or fixed IoT device). This user equipment apparatus can, for example, be furnished with corresponding capabilities as described in connection with the fixed and/or the wireless network node(s), as appropriate. The user equipment apparatus may be the user equipment and/or or a control device, such as a chipset or processor, configured to control the user equipment when installed therein. Examples of such functionalities include the bootstrapping server function and/or the home subscriber server, which may be implemented in the user equipment apparatus by providing the user equipment apparatus with software configured to cause the user equipment apparatus to perform from the point of view of these functions/nodes.

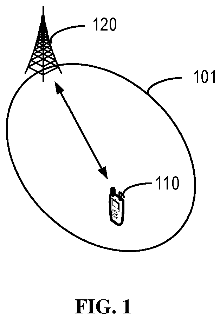

FIG. 1 shows an example communication network 100 in which embodiments of the present disclosure can be implemented. As shown in FIG. 1, the communication network 100 may comprise a terminal device 110 (hereinafter may also be referred to as a UE 110 or a first device 110). The communication network 100 may further comprise a network device 120 (hereinafter may also be referred to as a gNB 120 or a second device 120). The terminal device 110 and the network device 120 can communicate with each other in the coverage of the cell 101 and the terminal device 110.

It is to be understood that the number of network devices and terminal devices shown in FIG. 1 is given for the purpose of illustration without suggesting any limitations. The communication network 100 may include any suitable number of network devices and terminal devices.

As described above, the enhancement on time and frequency synchronization for Internet of Things (IoT) over Non-Terrestrial Networks (NTN) has been studied. With the GNSS capability, the UE can estimate and pre-compensate the timing and frequency offset of the service link based on its GNSS acquired position and serving satellite ephemeris with sufficient accuracy for UL transmission.

It has been agreed that a validity timer for UL synchronization (for example for satellite ephemeris and potentially other aspects) can be configured by the network, which is referred to, for example, when the timer can be set or reset, the duration of the timer and the UE behavior upon the timer expiry. For sporadic short transmission, the idle UE may wake up from idle Discontinuous Reception (DRX) / Power Saving Mode (PSM), access to the network and perform UL and/or Downlink (DL) communications for a short duration of time and go back to idle. Before accessing the network, the UE may acquire GNSS position fix and does not need to re-acquire a GNSS position fix for the transmission of the packets.

It has also been agreed that for sporadic short transmission, the UE in RRC_CONNECTED may go back to idle mode and re-acquire a GNSS position fix if GNSS becomes outdated.

Based on the current GNSS measurement configuration for sporadic short transmission, when the UE comes back to RRC idle mode from RRC connected mode, the RRC connection should be released which means the Signaling Radio Bearer (SRB)/ Data Radio Bearer (DRB) and the resource configuration are released.

However, for the long data transmission, there are remaining data to be transmitted after re-acquire GNSS position fix. To continue the data transmission, the UE may have to access the network again to perform contention based random access, establish the RRC connection including the SRB/DRB connection and the resource configuration. The procedure that RRC connected to RRC idle then to RRC connected is redundant which need more resources and power consumption, especially for the contention-based access procedure in IoT over NTN, long time duration for such behaviour will be expected and it will lead to unnecessary power consumption.

Therefore, an enhanced solution for UL synchronization for supporting the long data transmission is expected.

The present disclosure provides solutions of enhanced UL synchronization. In this solution, the UE may obtain a configuration of a gap within which a RRC connected state of the UE is kept. The UE may further receive, within the gap, system broadcasted information used for deriving a compensation on a transmission between the UE and the gNB in at least one of a time domain and frequency domain and perform a UL synchronization process within the gap. In this way, a process of the GNSS fix position refreshing and /or satellite ephemeris data reception and UL/DL re-synchronization can be achieved by the UE in RRC connected mode and therefore the resources and power consumption can be reduced.

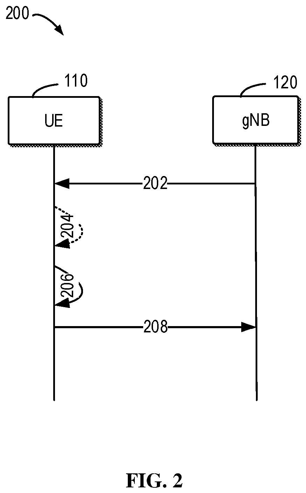

Principle and implementations of the present disclosure will be described in detail below with reference to FIG. 2, which shows a signaling chart illustrating a process 200 of enhanced UL synchronization according to some example embodiments of the present disclosure. For the purpose of discussion, the process 200 will be described with reference to FIG. 1. The process 200 may involve the UE 110 and the gNB 120.

The UE 110 may obtain a configuration of a gap. For example, the UE 110 may obtain the configuration of the gap from the gNB 120. As an option, the UE 110 may obtain a configuration of the gap in a process for establishing the RRC connection between the UE 110 and the gNB 120. As another option, the configuration of the gap may also be provided by the gNB 120 after the RRC connection between the UE 110 and the gNB 120 has been established.

It is also possible that the gap may also be determined by the UE 110. For example, the UE 110 may determine the gap before a validity timer for a current GNSS measurement expires and/or a validity timer for current satellite ephemeris data expires.

It is to be understood that the validity timer herein used may indicate a maximum time during which the UE 110 can apply the broadcast information for timing and frequency estimation without having acquired new broadcast information.

The UE 110 may keep the RRC connected state within the gap.

As shown in FIG. 2, within the gap, the UE 110 may receive 202 the system broadcasted information from the gNB 120. The system broadcasted information may be used for the UE 110 to deriving a compensation associated with a transmission between the UE 110 and the gNB 120 in a time domain and/or a frequency domain. For example, the system broadcasted information may comprise GNSS data and/or satellite ephemeris data.

In some example embodiments, the UE 110 may receive the system broadcasted information not earlier than the validity timer for a current GNSS measurement expires. That is, the UE 110 may receive the system broadcasted information when or after the validity timer for a current GNSS measurement expires. It is also possible that the UE 110 may receive the system broadcasted information not earlier than the validity timer for current satellite ephemeris data expires.

With the system broadcasted information, for example, the UE 110 may perform the GNSS measurement and re-acquire the GNSS fix position.

As an option, after receiving the system broadcasted information, the UE 110 may perform 204 a DL synchronizing between the UE 110 and the gNB 120 within the gap. For example, the UE 110 may perform the DL synchronizing by receiving Narrowband Primary Synchronization Signal (NB-PSS)/Narrowband Secondary Synchronization Signal (NB-SSS)/Narrowband Reference Signal (NRS) from the gNB 120.

If the UE 110 determines that the DL synchronization is not needed, the UE 110 may also use the history DL synchronization data in the successive UL/DL data transmission.

Within the gap, the UE 110 may perform 206 a UL synchronizing between the UE 110 and the gNB 120. For example, the UE 110 may perform the UL synchronization process after receiving the system broadcasted information via a contention free random-access procedure.

In some example embodiments, the gNB 120 may provide a parameters configuration for a contention free random-access procedure for the UE 110 to access the gNB 120. The UE 110 may receive the parameters configuration for a contention free random-access procedure before the validity timer for a current GNSS measurement expires and/or the validity timer for current satellite ephemeris data expires. For example, the parameters configuration may comprise at least one of the preamble index, the repetition number, time and frequency resources of the Physical Random Access Channel (PRACH) etc. Based on the parameters configuration and the received system broadcasted information, the UE 110 may perform the UL synchronization.

In some example embodiments, the UE 110 may obtain a time window within which the UE 110 can wait for the Physical Downlink Control Channel (PDCCH) ordered PRACH when or after the validity timer for a current GNSS measurement expires and/or the validity timer for current satellite ephemeris data expires.

For example, the time window can be configured by the gNB 120 before the validity timer for a current GNSS measurement expires and/or the validity timer for current satellite ephemeris data expires. It is also possible that the the time window can be predefined.

In some example embodiments, the UE 110 may monitor the PDCCH within this time window, which is not earlier than the validity timer for a current GNSS measurement expires and/or the validity timer for current satellite ephemeris data expires.

If the UE 110 receives a random-access command and a set of parameters for a contention free random-access procedure for the UE 110 to access the gNB 120 within the time window, the UE 110 may perform the UL synchronization based on the set of parameters and the system broadcasted information.

If the UE 110 fails to receive the PDCCH ordered PRACH in the time window, the UE 110 may switch to a RRC idle state.

After the UL synchronization is initiated by the UE 110, the gNB 120 may receive 208 random access information to perform the UL synchronization between the UE 110 and the gNB 120 within the gap.

After the GNSS fix position refresh and or and /or satellite ephemeris data reception and the UL synchronization process is completed, the UE 110 may continue the DL/UL data transmission with gNB 120 by reusing the available RRC connection.

If the UE 110 fails to complete the UL synchronization process 120 within the gap, the UE 110 may switch to a RRC idle state.

In this way, a process of the GNSS fix position refreshing and UL/DL re-synchronization can be achieved by the UE in RRC connected mode and therefore the resources and power consumption can be reduced.

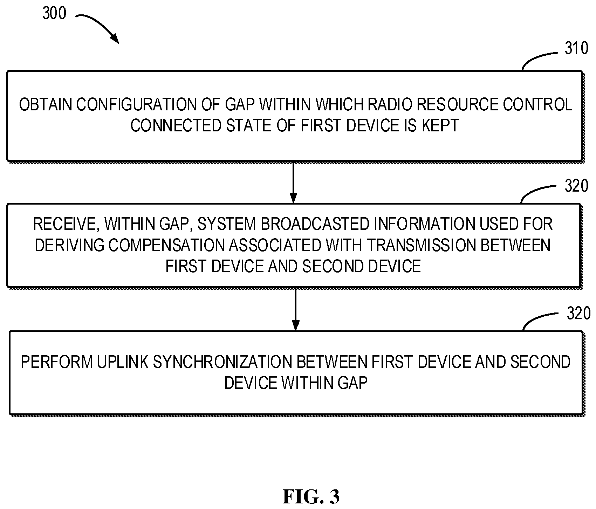

FIG. 3 shows a flowchart of an example method 300 of enhanced UL synchronization according to some example embodiments of the present disclosure. The method 300 can be implemented at the first device 110 as shown in FIG. 1. For the purpose of discussion, the method 300 will be described with reference to FIG. 1.

At 310, the first device obtains a gap within which a radio resource control connected state of the first device is kept.

In some example embodiments, the first device may receive, from the second device, a configuration of the gap during a process for establishing a RRC connection between the first device and second device or after the RRC connection has been established.

In some example embodiments, the first device may determine the gap before at least one of a validity timer for a current Global Navigation Satellite System, GNSS, measurement expires, or a validity timer for current satellite ephemeris data expires.

At 320, the first device receives, within the gap, system broadcasted information used for deriving a compensation associated with a transmission between the first device and a second device.

In some example embodiments, the first device may receive the system broadcasted information not earlier than a validity timer for a current Global Navigation Satellite System, GNSS, measurement expires, or a validity timer for current satellite ephemeris data expires.

In some example embodiments, the system broadcasted information may comprise at least one of Global Navigation Satellite System, GNSS, data or satellite ephemeris data.

At 330, the first device performs an uplink synchronization between the first device to the second device within the gap.

In some example embodiments, the first device may perform the synchronization process after receiving the system broadcasted information via a contention free random access procedure.

In some example embodiments, the first device may receive, from the second device, a parameters configuration for a contention free random access procedure for the first device to access the second device; and perform the uplink synchronization between the first device to the second device based on the parameters configuration and the system broadcasted information.

In some example embodiments, the first device may receive the parameters configuration before at least one of a validity timer for a current Global Navigation Satellite System, GNSS, measurement expires, or a validity timer for current satellite ephemeris data expires.

In some example embodiments, the first device may obtain a configuration of a time window for monitoring a control channel from the second device to the first device and monitor the control channel within the time window not earlier than at least one of a validity timer for a current Global Navigation Satellite System, GNSS, measurement expires, or a validity timer for current satellite ephemeris data expires. The first device may further receive a random-access command and a set of parameters for a contention free random access procedure for the first device to access the second device through the control channel; and perform the uplink synchronization between the first device to the second device based on the set of parameters and the system broadcasted information.

In some example embodiments, the first device may perform, within the gap, a further downlink synchronization process from the second device to the first device after receiving the system broadcasted information and before performing the uplink synchronization between the first device to the second device.

In some example embodiments, the first device comprises a terminal device and the second device comprises a network device.

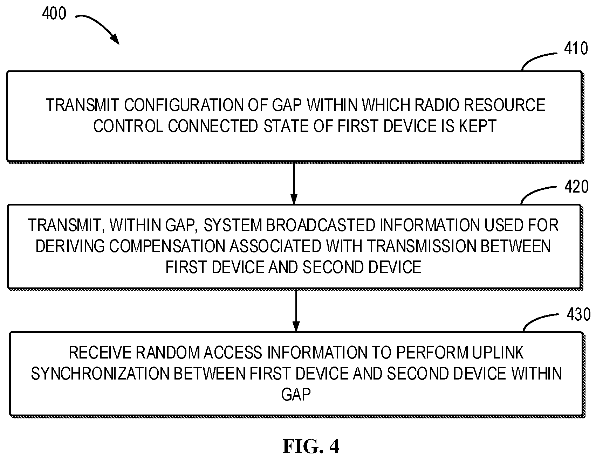

FIG. 4 shows a flowchart of an example method 400 of enhanced UL synchronization according to some example embodiments of the present disclosure. The method 400 can be implemented at the second device 120 as shown in FIG. 1. For the purpose of discussion, the method 400 will be described with reference to FIG. 1.

At 410, the second device transmits, to a first device, a configuration of a gap within which a radio resource control connected state of the first device is kept.

In some example embodiments, the second device may transmit the configuration of the gap during a process for establishing a RRC connection between the first device and second device or after the RRC connection has been established.

At 420, the second device transmit, within the gap, system broadcasted information used for deriving a compensation associated with a transmission between the first device and a second device.

In some example embodiments, the second device may transmit the system broadcasted information not earlier than a validity timer for a current Global Navigation Satellite System, GNSS, measurement expires, or a validity timer for current satellite ephemeris data expires.

In some example embodiments, the system broadcasted information may comprise at least one of Global Navigation Satellite System, GNSS, data or satellite ephemeris data.

In some example embodiments, the second device may transmit, to the first device, parameters configuration for a contention free random access procedure for the first device to access the second device before a validity timer for a current Global Navigation Satellite System, GNSS, measurement expires, or a validity timer for current satellite ephemeris data expires.

In some example embodiments, the second device may transmit a random-access command and a set of parameters for a contention free random access procedure for the first device to access the second device through the control channel.

At 430, the second device receives, from the first device, random access information to perform an uplink synchronization between the first device to the second device within the gap.

In some example embodiments, the first device comprises a terminal device and the second device comprises a network device.

In some example embodiments, an apparatus capable of performing the method 300 (for example, implemented at the UE 110) may comprise means for performing the respective steps of the method 300. The means may be implemented in any suitable form. For example, the means may be implemented in a circuitry or software module.

In some example embodiments, the apparatus comprises means for obtaining a configuration of a gap within which a radio resource control connected state of the first device is kept; means for receiving, within the gap, system broadcasted information used for deriving a compensation associated with a transmission between the first device and a second device; and means for performing a uplink synchronization between the first device to the second device within the gap.

In some example embodiments, an apparatus capable of performing the method 400 (for example, implemented at the gNB 120) may comprise means for performing the respective steps of the method 400. The means may be implemented in any suitable form. For example, the means may be implemented in a circuitry or software module.

In some example embodiments, the apparatus comprises means for transmitting, to a first device, a configuration of a gap within which a radio resource control connected state of the first device is kept; means for transmitting, within the gap, system broadcasted information used for deriving a compensation associated with a transmission between the first device and a second device; and means for receiving, from the first device, random access information to perform a uplink synchronization between the first device to the second device within the gap.

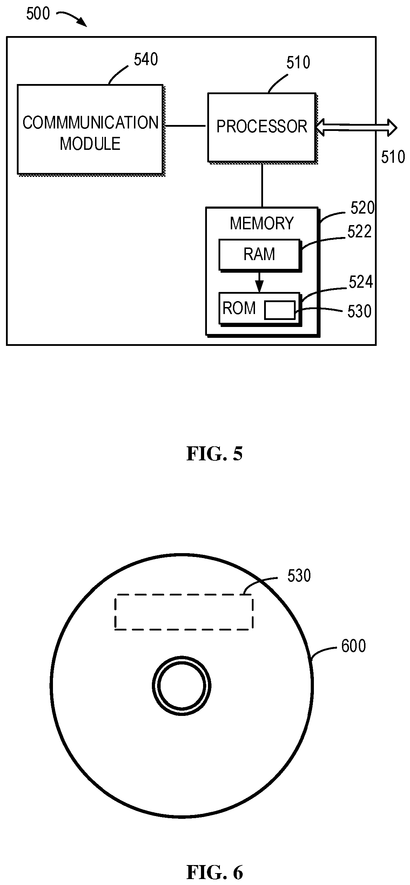

FIG. 5 is a simplified block diagram of a device 500 that is suitable for implementing embodiments of the present disclosure. The device 500 may be provided to implement the communication device, for example the UE 110 and the gNB 120 as shown in FIG. 1. As shown, the device 500 includes one or more processors 510, one or more memories 540 coupled to the processor 510, and one or more communication modules 540 coupled to the processor 510.

The communication module 540 is for bidirectional communications. The communication module 540 has one or more communication interfaces to facilitate communication with one or more other modules or devices. The communication interfaces may represent any interface that is necessary for communication with other network elements. In some example embodiments, the communication module 540 may include at least one antenna.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 522 and other volatile memories that will not last in the power-down duration.

A computer program 530 includes computer executable instructions that are executed by the associated processor 510. The program 530 may be stored in the ROM 520. The processor 510 may perform any suitable actions and processing by loading the program 530 into the RAM 520.

The embodiments of the present disclosure may be implemented by means of the program 530 so that the device 500 may perform any process of the disclosure as discussed with reference to FIGs. 2 to 4. The embodiments of the present disclosure may also be implemented by hardware or by a combination of software and hardware.

In some example embodiments, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. The computer readable medium may include any types of tangible non-volatile storage, such as ROM, EPROM, a flash memory, a hard disk, CD, DVD, and the like. FIG. 6 shows an example of the computer readable medium 600 in form of CD or DVD. The computer readable medium has the program 530 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, device, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 300 and 400 as described above with reference to FIGs. 3-4. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing device, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, device or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, device, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first device comprising:
at least one processor; and
at least one memory including computer program codes;
the at least one memory and the computer program codes are configured to, with the at least one processor, cause the first device at least to:
obtain (310) a configuration of a gap within which a radio resource control connected state of the first device is kept;
receive (320), within the gap, system broadcasted information used for deriving a compensation associated with a transmission between the first device and a second device; and
perform (320) a uplink synchronization between the first device to the second device within the gap.

2. The first device of claim 1, wherein the first device is caused to receive the system broadcasted information by:
receiving the system broadcasted information not earlier than at least one of the following:
a validity timer for a current Global Navigation Satellite System, GNSS, measurement expires, or
a validity timer for current satellite ephemeris data expires.

3. The first device of claim 1, wherein the system broadcasted information comprises at least one of the following:
Global Navigation Satellite System, GNSS, data; or
satellite ephemeris data.

4. The first device of claim 1, wherein the first device is caused to obtain the configuration of the gap by:
receiving, from the second device, the configuration of the gap during a process for establishing a RRC connection between the first device and second device or after the RRC connection has been established.

5. The first device of claim 1, wherein the first device is caused to obtain the configuration of the gap by:
determining the configuration of the gap before at least one of the following:
a validity timer for a current Global Navigation Satellite System, GNSS, measurement expires, or
a validity timer for current satellite ephemeris data expires.

6. The first device of claim 1, wherein the first device is caused to perform the uplink synchronization between the first device to the second device by:
performing the uplink synchronization after receiving the system broadcasted information via a contention free random access procedure.

7. The first device of claim 1, wherein the first device is caused to perform the uplink synchronization between the first device to the second device by:
receiving, from the second device, a parameters configuration for a contention free random access procedure for the first device to access the second device; and
performing the uplink synchronization between the first device to the second device based on the parameters configuration and the system broadcasted information.

8. The first device of claim 7, wherein the first device is caused to receive the parameters configuration by:
receiving the parameters configuration before at least one of the following:
a validity timer for a current Global Navigation Satellite System, GNSS, measurement expires, or
a validity timer for current satellite ephemeris data expires.

9. The first device of claim 1, wherein the first device is caused to perform the uplink synchronization between the first device to the second device by:
obtaining a configuration of a time window for monitoring a control channel from the second device to the first device;
monitoring the control channel within the time window not earlier than at least one of the following:
a validity timer for a current Global Navigation Satellite System, GNSS, measurement expires, or
a validity timer for current satellite ephemeris data expires;
receiving a random-access command and a set of parameters for a contention free random access procedure for the first device to access the second device through the control channel; and
performing the uplink synchronization between the first device to the second device based on the set of parameters and the system broadcasted information.

10. The first device of claim 1, wherein the first device is further caused to: perform, within the gap, a downlink synchronization between the second device to the first device after receiving the system broadcasted information and before performing the uplink synchronization between the first device to the second device.

11. The first device of claim 1, wherein the first device comprises a terminal device and the second device comprises a network device.

12. A second device comprising:
at least one processor; and
at least one memory including computer program codes;
the at least one memory and the computer program codes are configured to, with the at least one processor, cause the second device at least to:
transmit (410), to a first device, a configuration of a gap within which a radio resource control connected state of the first device is kept;
transmit (420), within the gap, system broadcasted information used for deriving a compensation associated with a transmission between the first device and a second device; and
receive (430), from the first device, random access information to perform an uplink synchronization between the first device to the second device within the gap.

13. The second device of claim 12, wherein the second device is caused to transmit the system broadcasted information by:
transmitting the system broadcasted information not earlier than at least one of the following:
a validity timer for a current Global Navigation Satellite System, GNSS, measurement expires, or
a validity timer for current satellite ephemeris data expires.

14. The second device of claim 12, wherein the system broadcasted information comprises at least one of the following:
Global Navigation Satellite System, GNSS, data; or
satellite ephemeris data.

15. The second device of claim 12, wherein the second device is caused to transmit the configuration of the gap by:
transmitting the configuration of the gap during a process for establishing a RRC connection between the first device and second device or after the RRC connection has been established.

## Patentansprüche

1. Erste Vorrichtung, die Folgendes umfasst:
mindestens einen Prozessor; und
mindestens einen Speicher, der Computerprogrammcodes beinhaltet;
der mindestens eine Speicher und die Computerprogrammcodes sind dazu ausgelegt, die erste Vorrichtung mit dem mindestens einen Prozessor mindestens zu Folgendem zu veranlassen:
Erhalten (310) einer Auslegung einer Lücke, in der ein Funkressourcensteuerungsverbindungsstatus der ersten Vorrichtung gehalten wird;
Empfangen (320) von Broadcastinformationen eines Systems, die zum Ableiten einer Kompensation verwendet werden, die mit einer Übertragung zwischen der ersten Vorrichtung und einer zweiten Vorrichtung verknüpft ist, in der Lücke; und
Durchführen (320) einer Uplinksynchronisation zwischen der ersten Vorrichtung bis der zweiten Vorrichtung in der Lücke.

2. Erste Vorrichtung nach Anspruch 1, wobei die erste Vorrichtung veranlasst wird, die Broadcastinformationen vom System durch Folgendes zu empfangen:
Empfangen der Broadcastinformationen vom System nicht früher als mindestens eines von Folgendem:
ein Gültigkeitstimer für eine aktuelle Messung eines globalen Navigationssatellitensystems, GNSS, läuft ab, oder
ein Gültigkeitstimer für aktuelle Satellitenephemeridendaten läuft ab.

3. Erste Vorrichtung nach Anspruch 1, wobei die Broadcastinformationen vom System mindestens eines von Folgendem umfassen:
Daten von einem globalen Navigationssatellitensystem, GNSS; oder
Satellitenephemeridendaten.

4. Erste Vorrichtung nach Anspruch 1, wobei die erste Vorrichtung veranlasst wird, die Auslegung der Lücke durch Folgendes zu erhalten:
Empfangen der Auslegung der Lücke während eines Prozesses zum Aufbauen einer RRC-Verbindung zwischen der ersten Vorrichtung und der zweiten Vorrichtung oder nachdem die RRC-Verbindung aufgebaut wurde, von der zweiten Vorrichtung.

5. Erste Vorrichtung nach Anspruch 1, wobei die erste Vorrichtung veranlasst wird, die Auslegung der Lücke durch Folgendes zu erhalten:
Bestimmen der Auslegung der Lücke vor mindestens einem von Folgendem:
ein Gültigkeitstimer für eine aktuelle Messung eines globalen Navigationssatellitensystems, GNSS, läuft ab, oder
ein Gültigkeitstimer für aktuelle Satellitenephemeridendaten läuft ab.

6. Erste Vorrichtung nach Anspruch 1, wobei die erste Vorrichtung veranlasst wird, die Uplinksynchronisation zwischen der ersten Vorrichtung bis der zweiten Vorrichtung durch Folgendes durchzuführen:
Durchführen der Uplinksynchronisation nach Empfangen der Broadcastinformationen vom System via eine konfliktfreie Direktzugriffsprozedur.

7. Erste Vorrichtung nach Anspruch 1, wobei die erste Vorrichtung veranlasst wird, die Uplinksynchronisation zwischen der ersten Vorrichtung bis der zweiten Vorrichtung durch Folgendes durchzuführen:
Empfangen einer Parameterauslegung für eine konfliktfreie Direktzugriffsprozedur für die erste Vorrichtung auf die zweite Vorrichtung von der zweiten Vorrichtung; und
Durchführen der Uplinksynchronisation zwischen der ersten Vorrichtung bis der zweiten Vorrichtung auf Basis der Parameterauslegung und der Broadcastinformationen vom System.

8. Erste Vorrichtung nach Anspruch 7, wobei die erste Vorrichtung dazu ausgelegt ist, die Parameterauslegung durch Folgendes zu empfangen:
Empfangen der Parameterauslegung vor mindestens einem von Folgendem:
ein Gültigkeitstimer für eine aktuelle Messung eines globalen Navigationssatellitensystems, GNSS, läuft ab, oder
ein Gültigkeitstimer für aktuelle Satellitenephemeridendaten läuft ab.

9. Erste Vorrichtung nach Anspruch 1, wobei die erste Vorrichtung veranlasst wird, die Uplinksynchronisation zwischen der ersten Vorrichtung bis der zweiten Vorrichtung durch Folgendes durchzuführen:
Erhalten einer Auslegung eines Zeitfensters zum Überwachen eines Steuerkanals von der zweiten Vorrichtung zur ersten Vorrichtung;
Überwachen des Steuerkanals im Zeitfenster nicht früher als mindestens eines von Folgendem:
ein Gültigkeitstimer für eine aktuelle Messung eines globalen Navigationssatellitensystems, GNSS, läuft ab, oder
ein Gültigkeitstimer für aktuelle Satellitenephemeridendaten läuft ab;
Empfangen eines Direktzugriffsbefehls und eines Satzes von Parametern für eine konfliktfreie Direktzugriffsprozedur für die erste Vorrichtung zum Zugreifen über den Steuerkanal auf die zweite Vorrichtung; und
Durchführen der Uplinksynchronisation zwischen der ersten Vorrichtung bis der zweiten Vorrichtung auf Basis des Satzes von Parametern und der Broadcastinformationen vom System.

10. Erste Vorrichtung nach Anspruch 1, wobei die erste Vorrichtung ferner zu Folgendem ausgelegt ist:
Durchführen einer Downlinksynchronisation zwischen der zweiten Vorrichtung bis der ersten Vorrichtung nach Empfangen der Broadcastinformationen vom System und vor Durchführen der Uplinksynchronisation zwischen der ersten Vorrichtung bis der zweiten Vorrichtung in der Lücke.

11. Erste Vorrichtung nach Anspruch 1, wobei die erste Vorrichtung eine Endgerätevorrichtung umfasst und die zweite Vorrichtung eine Netzwerkvorrichtung umfasst.

12. Zweite Vorrichtung, die Folgendes umfasst:
mindestens einen Prozessor; und
mindestens einen Speicher, der Computerprogrammcodes beinhaltet;
der mindestens eine Speicher und die Computerprogrammcodes sind dazu ausgelegt, die zweite Vorrichtung mit dem mindestens einen Prozessor mindestens zu Folgendem zu veranlassen:
Übertragen (410) einer Auslegung einer Lücke, in der ein Funkressourcensteuerungsverbindungsstatus einer ersten Vorrichtung gehalten wird, zur ersten Vorrichtung;
Übertragen (420) von Broadcastinformationen eines Systems, die zum Ableiten einer Kompensation verwendet werden, die mit einer Übertragung zwischen der ersten Vorrichtung und einer zweiten Vorrichtung verknüpft ist, in der Lücke; und
Empfangen (430) von Direktzugriffsinformationen zum Durchführen einer Uplinksynchronisation zwischen der ersten Vorrichtung bis der zweiten Vorrichtung von der ersten Vorrichtung in der Lücke.

13. Zweite Vorrichtung nach Anspruch 12, wobei die zweite Vorrichtung veranlasst wird, die Broadcastinformationen vom System durch Folgendes zu übertragen:
Übertragen der Broadcastinformationen vom System nicht früher als mindestens eines von Folgendem:
ein Gültigkeitstimer für eine aktuelle Messung eines globalen Navigationssatellitensystems, GNSS, läuft ab, oder
ein Gültigkeitstimer für aktuelle Satellitenephemeridendaten läuft ab.

14. Zweite Vorrichtung nach Anspruch 12, wobei die Broadcastinformationen vom System mindestens eines von Folgendem umfassen:
Daten von einem globalen Navigationssatellitensystem, GNSS; oder
Satellitenephemeridendaten.

15. Zweite Vorrichtung nach Anspruch 12, wobei die zweite Vorrichtung veranlasst wird, die Auslegung der Lücke durch Folgendes zu übertragen:
Übertragen der Auslegung der Lücke während eines Prozesses zum Aufbauen einer RRC-Verbindung zwischen der ersten Vorrichtung und der zweiten Vorrichtung oder nachdem die RRC-Verbindung aufgebaut wurde.

## Revendications

1. Premier dispositif comprenant :
au moins un processeur ; et
au moins une mémoire comportant des codes de programme informatique ;
l'au moins une mémoire et les codes de programme informatique sont configurés pour, avec l'au moins un processeur, amener le premier dispositif à au moins :
obtenir (310) une configuration d'un intervalle dans lequel un état connecté de contrôle de ressources radio du premier dispositif est maintenu ;
recevoir (320) dans l'intervalle des informations système diffusées utilisées pour dériver une compensation associée à une transmission du premier dispositif à un deuxième dispositif ; et
effectuer (320) une synchronisation de liaison montante du premier dispositif au deuxième dispositif dans l'intervalle.

2. Premier dispositif selon la revendication 1, dans lequel le premier dispositif est amené à recevoir les informations système diffusées :
en recevant les informations système diffusées pas plus tôt qu'au moins l'un des événements suivants :
l'expiration d'un temporisateur de validité pour une mesure actuelle de système mondial de navigation par satellite, GNSS, ou
l'expiration d'un temporisateur de validité pour des données d'éphéméride de satellite actuelles.

3. Premier dispositif selon la revendication 1, dans lequel les informations système diffusées comprennent au moins des données parmi :
des données de système mondial de navigation par satellite, GNSS ; ou
des données d'éphéméride de satellite.

4. Premier dispositif selon la revendication 1, dans lequel le premier dispositif est amené à obtenir la configuration de l'intervalle :
en recevant du deuxième dispositif la configuration de l'intervalle pendant un processus d'établissement d'une connexion RRC du premier dispositif au deuxième dispositif ou après que la connexion RRC a été établie.

5. Premier dispositif selon la revendication 1, dans lequel le premier dispositif est amené à obtenir la configuration de l'intervalle :
en déterminant la configuration de l'intervalle avant au moins l'un des événements suivants :
l'expiration d'un temporisateur de validité pour une mesure actuelle de système mondial de navigation par satellite, GNSS, ou
l'expiration d'un temporisateur de validité pour des données d'éphéméride de satellite actuelles.

6. Premier dispositif selon la revendication 1, dans lequel le premier dispositif est amené à effectuer la synchronisation de liaison montante du premier dispositif au deuxième dispositif :
en effectuant la synchronisation de liaison montante après avoir reçu les informations système diffusées via une procédure d'accès aléatoire sans contention.

7. Premier dispositif selon la revendication 1, dans lequel le premier dispositif est amené à effectuer la synchronisation de liaison montante du premier dispositif au deuxième dispositif :
en recevant du deuxième dispositif une configuration de paramètres pour une procédure d'accès aléatoire sans contention permettant au premier dispositif d'accéder au deuxième dispositif ; et
en effectuant la synchronisation de liaison montante du premier dispositif au deuxième dispositif sur la base de la configuration de paramètres et des informations système diffusées.

8. Premier dispositif selon la revendication 7, dans lequel le premier dispositif est amené à recevoir la configuration de paramètres :
en recevant la configuration de paramètres avant au moins l'un des événements suivants :
l'expiration d'un temporisateur de validité pour une mesure actuelle de système mondial de navigation par satellite, GNSS, ou
l'expiration d'un temporisateur de validité pour des données d'éphéméride de satellite actuelles.

9. Premier dispositif selon la revendication 1, dans lequel le premier dispositif est amené à effectuer la synchronisation de liaison montante du premier dispositif au deuxième dispositif :
en obtenant une configuration d'une fenêtre temporelle pour surveiller un canal de contrôle du deuxième dispositif au premier dispositif ;
en surveillant le canal de contrôle dans la fenêtre temporelle pas plus tôt qu'au moins l'un des événements suivants :
l'expiration d'un temporisateur de validité pour une mesure actuelle de système mondial de navigation par satellite, GNSS, ou
l'expiration d'un temporisateur de validité pour des données d'éphéméride de satellite actuelles ;
en recevant une commande d'accès aléatoire et un ensemble de paramètres pour une procédure d'accès aléatoire sans contention permettant au premier dispositif d'accéder au deuxième dispositif via le canal de contrôle ; et
en effectuant la synchronisation de liaison montante du premier dispositif au deuxième dispositif sur la base de l'ensemble de paramètres et des informations système diffusées.

10. Premier dispositif selon la revendication 1, dans lequel le premier dispositif est en outre amené à :
effectuer dans l'intervalle une synchronisation de liaison descendante du deuxième dispositif au premier dispositif après avoir reçu les informations système diffusées et avant d'effectuer la synchronisation de liaison montante du premier dispositif au deuxième dispositif.

11. Premier dispositif selon la revendication 1, dans lequel le premier dispositif comprend un dispositif terminal et le deuxième dispositif comprend un dispositif réseau.

12. Deuxième dispositif comprenant :
au moins un processeur ; et
au moins une mémoire comportant des codes de programme informatique ;
l'au moins une mémoire et les codes de programme informatique sont configurés pour, avec l'au moins un processeur, amener le deuxième dispositif à au moins :
transmettre (410) à un premier dispositif une configuration d'un intervalle dans lequel un état connecté de contrôle de ressources radio du premier dispositif est maintenu ;
transmettre (420) dans l'intervalle des informations système diffusées utilisées pour dériver une compensation associée à une transmission du premier dispositif à un deuxième dispositif ; et
recevoir (430) du premier dispositif des informations d'accès aléatoire pour effectuer une synchronisation de liaison montante du premier dispositif au deuxième dispositif dans l'intervalle.

13. Deuxième dispositif selon la revendication 12, dans lequel le deuxième dispositif est amené à transmettre les informations système diffusées :
en transmettant les informations système diffusées pas plus tôt qu'au moins l'un des événements suivants :
l'expiration d'un temporisateur de validité pour une mesure actuelle de système mondial de navigation par satellite, GNSS, ou
l'expiration d'un temporisateur de validité pour des données d'éphéméride de satellite actuelles.

14. Deuxième dispositif selon la revendication 12, dans lequel les informations système diffusées comprennent au moins des données parmi :
des données de système mondial de navigation par satellite, GNSS ; ou
des données d'éphéméride de satellite.

15. Deuxième dispositif selon la revendication 12, dans lequel le deuxième dispositif est amené à transmettre la configuration de l'intervalle :
en transmettant la configuration de l'intervalle pendant un processus d'établissement d'une connexion RRC du premier dispositif au deuxième dispositif ou après que la connexion RRC a été établie.
